# EUROPÄISCHE PATENTSCHRIFT

(11) **EP 0 588 768 B1**
(45) Veröffentlichungstag und Bekanntmachung des Hinweises auf die Patenterteilung: **07.05.1997**
(21) Anmeldenummer: 93810633.3
(22) Anmeldetag: 06.09.1993
(51) Int. Cl.: C09C 3/08, D21H 17/67, C09D 7/12, C04B 33/14, C08K 3/00, C09D 17/00

(54) **Verfahren zur Verbesserung von Weissgrad, Helligkeit und Farbort von Füllstoffen und Pigmenten**
Process for improving the degree of whiteness, the brightness and the colour location of fillers and pigments
Procédé d'amélioration du degré de blancheur, de l'éclat et du lieu de couleur de matières de charge et de pigments

(30) Priorität: 14.09.1992 DE 4230656
(43) Veröffentlichungstag der Anmeldung: 23.03.1994
(73) Patentinhaber: Ciba Specialty Chemicals Holding Inc., 4057 Basel (CH)
(72) Erfinder: von Raven, Axel, Dr., D-82402 Seeshaupt (DE)

(56) Entgegenhaltungen:
- CH-A- 548 484
- FR-A- 2 203 857
- US-A- 4 661 164
- DATABASE WPI Week 8825, Derwent Publications Ltd., London, GB; AN 88-173472 & SU-A-1 353 789 (GEOR. LOCAL IND. CONS.) 23. November 1987
- PATENT ABSTRACTS OF JAPAN vol. 4, no. 113 (C-21)13. August 1980 & JP-A-55 071 760 (KINOSHITA KENKYUSHO) 30. Mai 1980
- DATABASE WPI Week 9203, Derwent Publications Ltd., London, GB; AN 92-016730 & DD-A-292 892 (FR-SCHILLER-UNIV. JENA UND VEB KERAMISCHE HERMSDOF.)
- SU-A-1 353 789 (GEOR. LOCAL IND. CONS.) 23. November 1987

## Beschreibung

Die Erfindung betrifft den Zusatz von photosensibilisierenden Verbindungen zu anorganischen Füllstoffen und Pigmenten zur Verbesserung von deren Weissgrad, Helligkeit und Farbort; sowie die so erhaltenen Füllstoffe, Pigmente und deren Gemische.

Füllstoffe und Pigmente werden bei der Herstellung einer Vielzahl von Produkten verwendet. So sind typische Einsatzgebiete etwa die Lack-, Farben-, Keramik-, Gummi- und Kunststoffherstellung. Die grössten Mengen an Weisspigmenten finden jedoch Einsatz beim Streichen von Papier. Die Pigmente bilden den eigentlichen "Körper" des Strichs. Da sie, von einzelnen Ausnahmen abgesehen, 80 % bis 95 % des gesamten trockenen Streichgewichts ausmachen, bestimmen sie in hohem Masse die Qualität und vor allem den Weissgrad des Striches, sowie seine Wirtschaftlichkeit.

Die in der Natur vorkommenden Füllstoffe und Pigmente wie z.B. Kaolin, natürliche Calciumcarbonate (z.B. Kreide und Marmor) und Talkum etc. entsprechen dabei vielfach nicht den hohen Weissgradanforderungen. Beimengungen von stark färbenden Substanzen, wie farbige Mineralien oder Humus, können den Weissgrad stark negativ beeinflussen. Aus diesem Grund wurden zahlreiche Verfahren zur Verbesserung des Weissgrades und des Farbortes entwickelt.

Generell kann man hierbei zwischen physikalischen und chemischen Methoden unterscheiden. Unter physikalischen Methoden werden solche verstanden, die eine färbende Verunreinigung auf mechanischem Wege selektiv entfernen. Dies sind vor allem Flotation, selektive Sedimentation sowie Magnetscheideverfahren. Die chemischen Verfahren beruhen im allgemeinen auf einer "Bleichung". Hierbei wird, bei organisch färbender Bestandteile meisst oxidativ und bei anorganisch färbenden Bestandteilen meisst reduktiv, gebleicht. Im allgemeinen ist es das Ziel, vorhandenes 3-wertiges Eisen in 2-wertiges zu überführen und dieses, in gelöster Form, möglichst vollständig zu entfernen. Ansonsten würde es durch Rückoxidation an der Luft den Weissgrad nach und nach wieder verschlechtern.

In der Patentliteratur ist eine Vielzahl von Bleichmethoden beschrieben. Die häufigsten Reduktionsmittel sind hierbei Natrium- und Zinktdithionit. Das so in Lösung gebrachte 2-wenige Eisen muss dann komplex gebunden werden, damit es in Lösung bleibt, bzw. der nicht entfernbare Anteil muss vor der Rückoxidation geschützt werden. Üblicherweise werden dazu Phosphate, Fluoride oder Komplexbildner wie EDTA verwendet. Eine weitere Methode beruht auf der Entfernung der gelösten 2-wertigen Eisenionen mittels lonenaustauschem.

Eine andere Möglichkeit zur Verbesserung des Weissgrades besteht in der Beimengung von Farbstoffen zu den Füllstoffen und Pigmenten. Die Nachteile beruhen hierbei darauf, dass, im Gegensatz zum Weissgrad, die Helligkeit abnimmt und die Farbstoffe beim Aufschlämmen der Pigmente oder des Füllmaterials sich von diesem trennen können.

Überraschenderweise wurde nun gefunden, dass man die Verbesserung von Weissgrad, Helligkeit und Farbort von Füllstoffen, Pigmenten oder deren Mischungen durch den Zusatz von wasserlöslichen Phthalocyanin Photoaktivatoren erreichen kann.

Bei diesem Verfahren werden sowohl die anorganischen als auch die organischen Bestandteile "gebleicht".

Vorzugsweise wird zu diesem Zweck der Photoaktivator oder eine Mischung aus Photoaktivatoren, gegebenenfalls im Gegenwart von weiteren Hilfsmitteln, wie oberflächenaktiven Hilfsmitteln, z.B. Dodecylsulfat, Komplexbildnern, z.B. Phosphonaten, und Füllmitteln, z.B. Zeolithen sowie die Füllstoffe, Pigmente oder deren Mischungen mit Wasser intensiv vermischt. Bevorzugt wird dabei bei 10 bis 90°C und besonders bevorzugt bei 20 bis 70°C, für mehr als eine halbe Stunde, bevorzugt für 1 bis 3 Stunden, intensiv gemischt, um eine gute Durchmischung mit dem Sauerstoff der Luft zu erhalten. Der pH-Wert der Suspension beträgt dabei bevorzugt 7,0 bis 11. Das Mischen kann dabei z.B. durch Rühren, Umpumpen oder Einblasen von Luft geschehen.

Der Anteil an Photoaktivator liegt im allgemeinen bei 0,0001 bis 0,1 % und bevorzugt bei 0,001 bis 0,01 %, in Bezug auf die Menge an eingesetztem Füllstoff oder Pigment.

Die Suspension der so erhaltenen katalytisch gebleichten Füllstoffe, Pigmente oder der Mischungen kann danach bei 60-90°C getrocknet werden. Es besteht jedoch auch die Möglichkeit, die noch feuchten Füllstoffe und Pigmente direkt weiter zu verarbeiten.

Der Vorteil liegt dabei im katalytischen Ablauf des Verfahrens, wobei der Photoaktivator (Katalysator) durch sein Verbleiben bei den Füllstoffen und Pigmenten eine Entfernung der entfarbten Verbindungen unnötig macht.

Als für das Verfahren geeignete Photoaktivatoren können alle wasserlöslichen Phthalocyanine wie z.B. die Phthalocyanin-Metallkomplexe des Aluminiums, Zinks, Mangans, Magnesiums, Calciums, Eisens, Natriums oder Kaliums, verwendet werden. Diese Verbindungen können dabei einzeln oder als Gemische eingesetzt werden.

Besonders bevorzugt sind Verbindungen der Formel (1) 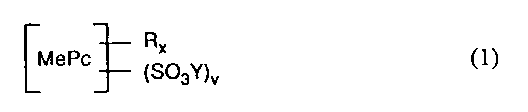 sowie deren Mischungen, worin
- MePC: das Zink-, Mangan- oder Aluminiumphthalocyaninringsystem,
- Y: Wasserstoff, ein Alkalimetall oder Ammonium, bevorzugt Wasserstoff, Kalium oder Natrium,
- v: eine beliebige Zahl von 1 bis 4, bevorzugt eine Zahl von 2 bis 4,
- R: Fluor, Chlor, Brom oder Iod, bevorzugt Chlor oder Brom,
- x: eine beliebige Zahl von 0 bis 8, bevorzugt (wenn MePC das Zink- oder Aluminiumphthalocyaninringsystem ist) eine beliebige Zahl von 0,8 bis 2
bedeutet.

Die verwendeten Photoaktivatoren und ihre Herstellung sind allgemein bekannt und werden zum Teil beim Bleichen von Textilien (GB-A-1 372 036, US-A-3 927 967, DE-A-2 613 936, DE-A-2 812 278) eingesetzt. Im Unterschied zu den dort beschriebenen Bedingungen ist beim Bleichen von Füllstoffen, Pigmenten oder deren Mischungen überraschenderweise eine Bestrahlung mit Licht, während der Behandlung oder zumindest im feuchten Zustand, sowie ein Zusatz von Gerüststoffen und Detergentien nicht erforderlich.

Die in diesem Verfahren einsetzbaren weißen Füllstoffe oder Pigmente sind z.B. anorganische Pigmente wie Aluminiumsilikate, Magnesiumsilikate,
Aluminium/Magnesium-Mischsilikate, Calciumcarbonate, Calciumsulfate, Titandioxide sowie deren Mischungen. Bevorzugt sind dabei weisse Füllstoffe und Weisspigmente wie Titandioxid, Kaolin, Bentonit, Kreide, Kalkstein, Marmor, Calcit, Aragonit, Glimmer, Gips, Talkum oder deren Mischungen.

Ein weiterer Gegenstand der Anmeldung sind die mit dem erfindungsgemässen Verfahren behandelten Füllstoffe, Pigmente und deren Mischungen, sowie deren Verwendung bei der Lack-, Farben-, Keramiken-, Gummi-, Kunststoff- und insbesondere der Papierherstellung.

Die so erhaltenen Füllstoffe, Pigmente und deren Mischungen finden in der Lack-, Farben-, Keramik-, Gummi-, Kunststoff- und vor allem in der Papierindustrie Verwendung. Dazu können sie mit weiteren Bestandteilen wie optischen Aufhellern; Bindemitteln wie Latex, Acrylsäure- oder Styrolpolymere oder deren Copolymere; Fasermaterialien wie Cellulose und anderen Hilfsmitteln wie Polyethylenglykol oder Glykolethern, vermischt werden.

Besonders vorteilhafte synergistische Effekte findet man auch bei der Kombination der Photoaktivatoren mit optischen Aufhellern wie z.B. Diphenylbistyrylaufhellern.

Die folgenden Beispiele erläutern die Erfindung ohne sie darauf zu beschränken. Die %-Angaben beziehen sich dabei, soweit nicht anders angegeben, auf das Gewicht.

### Beispiel 1:

Es werden 400 g trockener Füllstoff gemäss Tabelle 1 in 500 g Leitungswasser, das 0,15 % Polyacrylat enthält, dispergiert und mit Natronlauge der pH-Wert auf 9,5 eingestellt. Zu der enthaltenen Dispersion werden 0,05 % Natriumdodecylsulfat und, nach gutem Durchmischen, 40 mg einer 0,1 %igen Lösung, enthaltend ein Phthalocyanin der Formel (2), 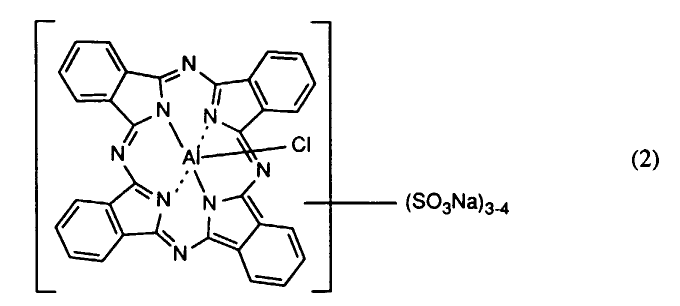 zudosiert. Die so erhaltene Suspension wird für 2 Stunden bei Zimmertemperatur mit einem Rührer bei mittlerer bis hoher Umdrehungszahl gerührt.

Anschliessend werden die Proben im Trockenschrank mit Umluft bei 70°C bis zur Gewichtskonstanz getrocknet, dann gemahlen und der Weissgrad, in Anlehnung an DIN 53245, Teil 1+2, bestimmt.

Dazu wird auf einer Glasplatte eine Messtablette, bei einem Pressdruck von 120 kPa während 10 sec., hergestellt. Die Bestimmung der Reflexionsfaktoren erfolgt an der Oberfläche, die bei der Pressung mit der Glasplatte in Berührung stand, mit einem Gerät, das die Anforderungen von DIN 53145 Teil 1 erfüllt.

**Tabelle 1:**

| Füllstoff/Pigment | Weissgrad | |
|---|---|---|
| | ohne | mit Photoaktivator |
| Masse-Kaolin | 85,2 | 88,1 |
| Streich-Kaolin | 84,6 | 86,0 |
| Glimmer | 77,8 | 78,5 |
| Talkum | 78,1 | 83,7 |
| Rauchgasgips | 77,6 | 83,4 |
| CaCO₃ - Slurry | 81,8 | 84,6 |

Die Ergebnisse von Tabelle 1 zeigen eine deutliche Verbesserung des Weissgrades, bei Zusatz eines Photoaktivators.

### Beispiel 2:

Es werden die in Tabelle 2 angegebenen Mischungen, wie in Beispiel 1 angegeben, hergestellt und ebenso der Weissgrad bestimmt.

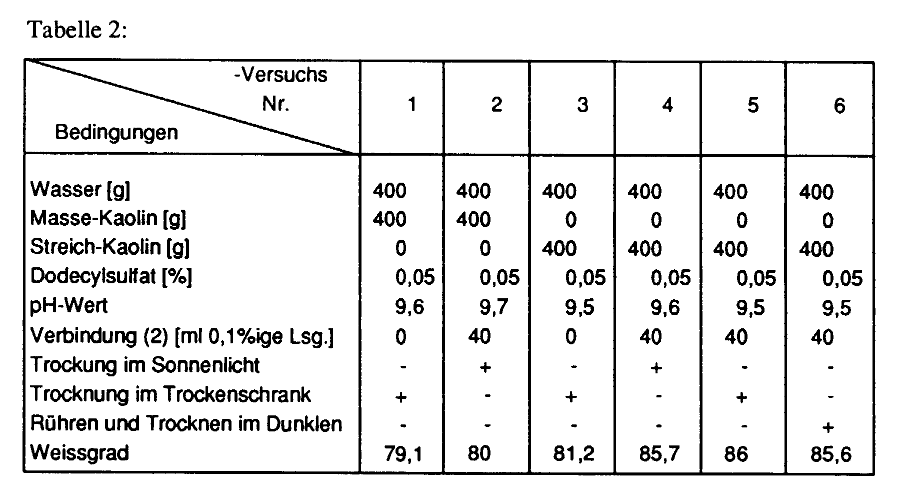

Die Ergebnisse von Tabelle 2 zeigen deutlich, dass eine Bestrahlung mit Licht, zur Erhöhung des Weissgrades, nicht erforderlich ist.

### Beispiel 3:

Es werden die in Tabelle 3 angegebenen Mischungen, wie in Beispiel 1 beschrieben, hergestellt und ebenso die Weissgrade bzw. Farbwerte bestimmt.

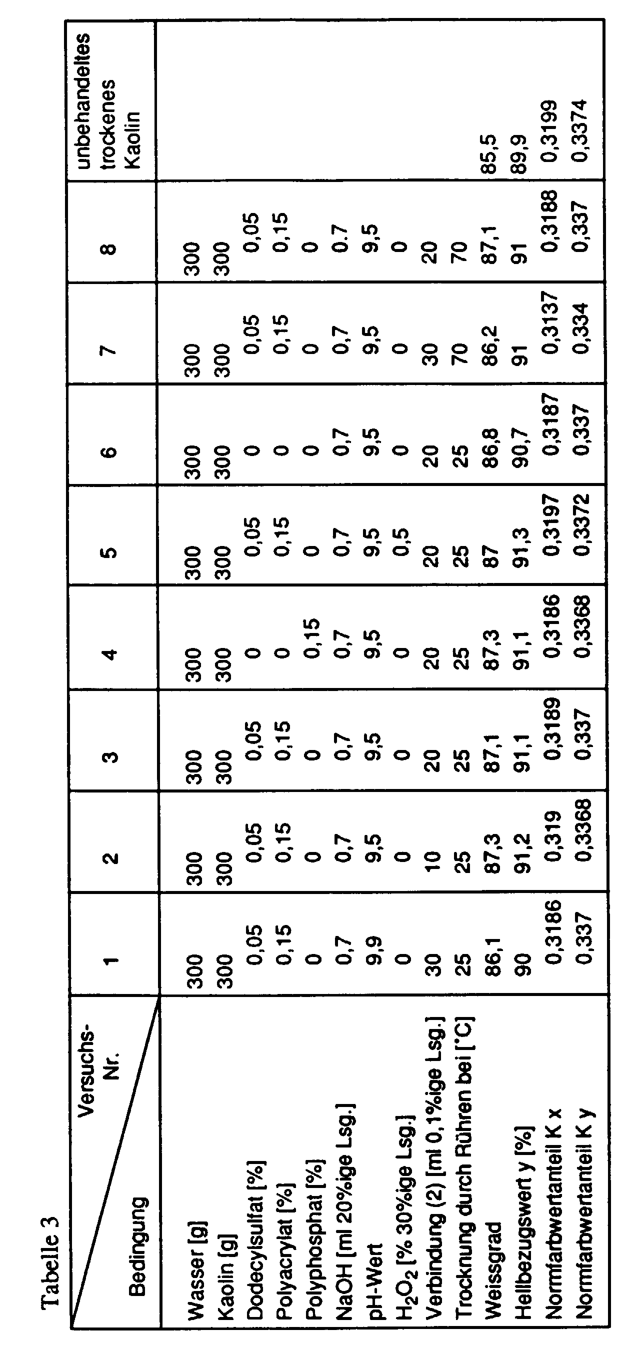

Die Ergebnisse von Tabelle 3 zeigen, dass die Anwesenheit von Gerüststoffen und Detergentien, zur Erhöhung des Weissgrades, nicht erforderlich ist.

### Beispiel 4:

Es werden die in Tabelle 4 angegebenen Mischungen, wie in Beispiel 1 beschrieben, hergestellt und ebenso die Weissgrad bzw. Farbwerte bestimmt.

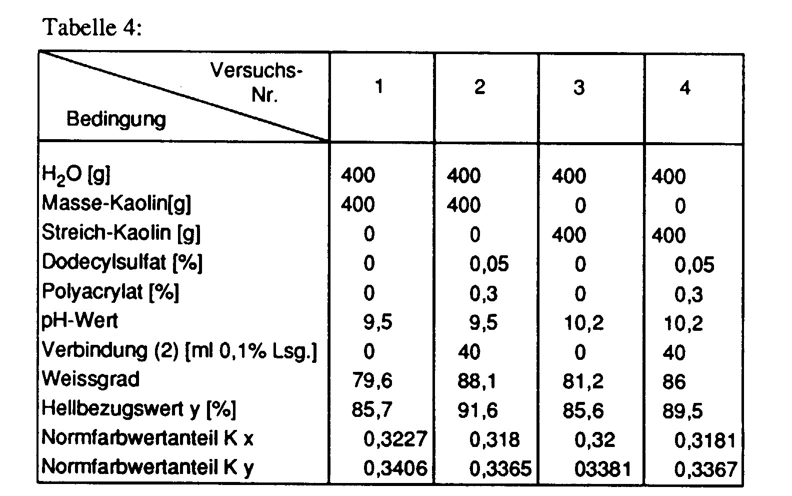

Die Ergebnisse aus Tabelle 4 zeigen, dass sich trotz deutlicher Erhöhung des Weissgrades der Farbort kaum verändert.

### Beispiel 5:

Es werden die in Tabelle 5 angegebenen Mischungen, wie in Beispiel 1 beschrieben, hergestellt, wobei als Pigment Calciumcarbonat verwendet wird. Der Weissgrad bzw. Farbwerte werden, wie in Beispiel 1 beschreiben, bestimmt.

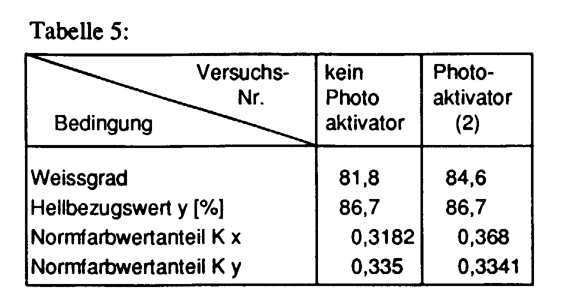

### Beispiel 6:

Es werden die in Tabelle 6 angegebenen Mischungen, wie in Beispiel 1 beschrieben, hergestellt und ebenso die Weissgrad bzw. Farbwerte bestimmt.

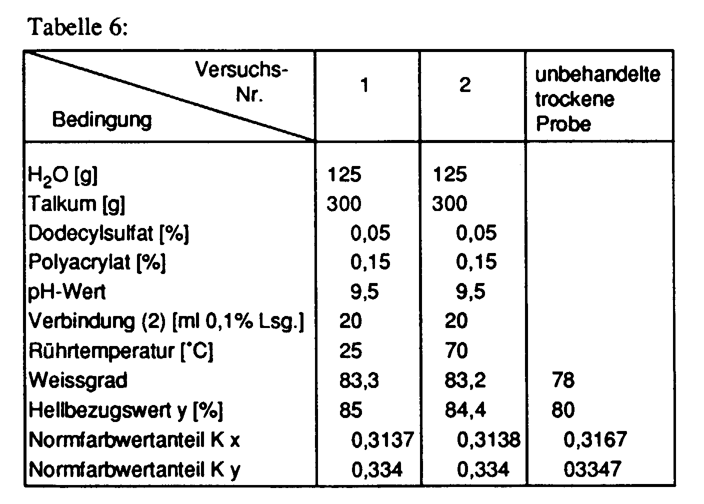

Die Ergebnisse aus Tabelle 6 zeigen den geringen Einfluss der Rührtemperatur auf den Weissgrad.

### Beispiel 7:

Eine Streichmasse wird aus den folgenden Komponenten hergestellt:
- 100 Teile: trockener Clay DB® (eingesetzt als 70%iger Slurry);
- 0,5 Teile: Polyvinylalkohol (Mowiol 4-98®);
- 18 Teile: 50%ige Dispersion einer Styrol/Butylgummilatex (Dow Latex 955®); und
- 4 ppm: der Verbindung der Formel (3) oder (4):

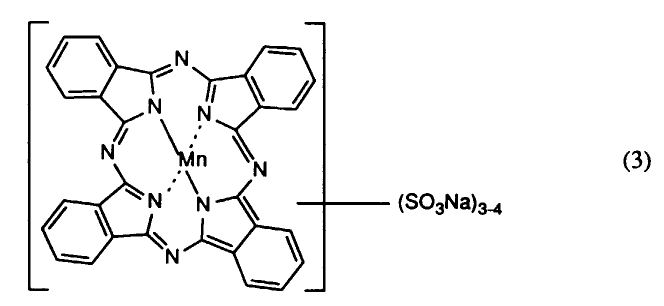

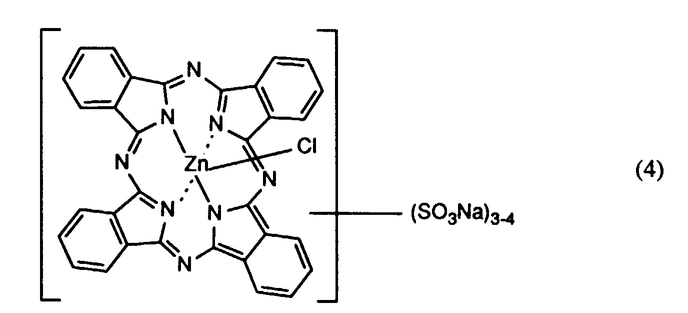

Die Dispergierungsion erfolgt bei pH=10 (NaOH) durch starkes Rühren.

Die so erhaltene Dispersion wird auf stark holzhaltiges Rohpapier (50% Holzschliff) gestrichen. Der Strich erfolgt mit einem Laborcoater mit Blade (Dow Coater), sodass der Strichauftrag 12,5 g/m² beträgt. Nach der Trocknung, die mit Heissluft von 195-200°C bis zum Erreichen der Gleichgewichtsfeuchtigkeit erfolgt, wird der Weissgrad, in Ablehnung an DIN 53245 Teil 1+2, bestimmt.

Der Weissgrad wird auch bei nachträglicher Belichtung über 5, 10, 20 oder 40 Stunden unter Neon-Tageslichtlampen bestimmt.

**Tabelle 7:**

| | TAPPI-Weisse (R₄₅₇) | | |
|---|---|---|---|
| Neonexposition | ohne Zusatz | Verbindung (3) | Verbindung (4) |
| ohne | 56,11 | 57,65 | 57,78 |
| 5h | 55,88 | 56,96 | 57,05 |
| 10h | 56,43 | 57,43 | 57,44 |
| 20h | 56,26 | 57,07 | 57,55 |
| 40h | 55,98 | 57,12 | 57,37 |

Die Ergebnisse von Tabelle 7 zeigen, dass der Zusatz geringster Mengen der Verbindungen der Formeln (3) oder (4) zur Streichmasse die TAPPI-Weisse nach dem Trocknen auf holzhaltigen Streichrohpapieren erhöht. Dieser Vorteil bleibt auch bei nachträglicher Belichtung erhalten.

### Beispiel 8:

Eine Streichfarbe wird durch Vermischen unter intensiven Rühren aus den folgenden Komponenten hergestellt:
- 100 Teile: Kaolin (70%iger wässriger Slurry)
- 0,02 Teile: Entschäumungsmittel
- 0,8 Teile: Gleitmittel
- 4,5 Teile: Polyacrylat-Binder
- 0,3 Teile: Verdicker
- 0,2 Teile: Alkali (NaOH)
- 3 ppm: Verbindung der Formel (2)
- 0,15-0,3%: des optischen Aufhellers der Formel:

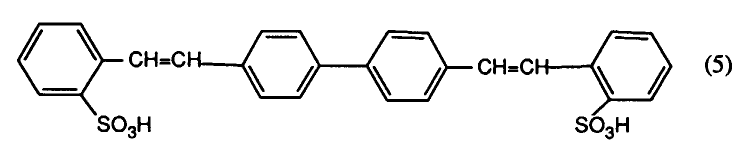

A) Auf einem Helicoater (Helicoater 2000®) (appliziert als 15% wässriger Slurry) werden mit der so hergestellten Streichfarbe vier Versuche durchgeführt, bei denen unterschiedliche Mengen an optischem Aufheller der Formel (5) zugegeben werden.

**Tabelle 8:**

| | Versuchs Nr. | | | |
|---|---|---|---|---|
| Bedingungen | 1 | 2 | 3 | 4 |
| % Verb. der Formel (5) | 0,15 | 0,15 | 0,30 | 0,30 |
| Verb. der Formel (2) | - | 3 | - | 3 |
| Weissgrad | | | | |
| 1) ohne UV | 81,9 | 82,4 | 81,1 | 82,2 |
| 2) mit UV | 85,51 | 86,27 | 85,51 | 86,52 |
| Helligkeit | 85,23 | 85,77 | 85,05 | 85,73 |

Aus den Versuchsergebnissen geht hervor, dass durch die kombinierte Anwendung von optischen Aufhellern der Formel (5) und der Verbindung der Formel (2) eine deutliche Erhöhung des Weissgrades - ohne und mit UV Anteil - in Vergleich zum alleinigen Einsatz von Aufheller erfolgt. Gleichzeitig wird eine leichte Farbortverschiebung von gelb ins Bläuliche ermöglicht.
B) Auf einem Dixon-Coater werden mit der so hergestellten Streichfarbe, die aber nur 0,2% des optischen Aufhellers der Formel (5) enthält, zwei Versuche durchgeführt.

**Tabelle 9:**

| | Versuchs Nr. | |
|---|---|---|
| Bedingungen | 1 | 2 |
| % Verb. der Formel (5) | 0,2 | 0,2 |
| Verb. der Formel (2) | - | 3 |
| Weissgrad (WG) | | |
| 1) WG Glühlampe | 73,3 | 75,8 |
| 2) WG Xenonlicht | 77,6 | 78,2 |

Aus den Ergebnissen in Tabelle 9 geht hervor, dass bei diesen Versuchen eine deutliche Erhöhung des Weissgrades durch die Kombination der Verbindungen der Formeln (2) und (5) in Vergleich zu dem Versuch mit der Verbindung der Formel (5) allein ermöglicht wird.

## Patentansprüche

1. Verfahren zur Verbesserung von Weissgrad, Helligkeit und Farbort von weissen, anorganischen Füllstoffen, Pigmenten oder deren Mischungen, dadurch gekennzeichnet, dass ein wasserlöslicher Phthalocyanin-Photoaktivator oder eine Mischung aus wasserlöslichen Phthalocyanin-Photoaktivatoren zu den Füllstoffen, Pigmenten oder deren Mischungen, gegeben werden.

2. Verfahren gemäss Anspruch 1, dadurch gekennzeichnet, dass der Photoaktivator oder eine Mischung aus Photoaktivatoren, die Füllstoffe, Pigmente oder deren Mischungen sowie gegebenenfalls weitere Komponenten mit Wasser zu einer wässrigen Suspension vermischt werden.

3. Verfahren gemäss Anspruch 2, dadurch gekennzeichnet, dass der pH-Wert der Suspension bei 7,0 bis 11 liegt.

4. Verfahren gemäss Anspruch 2, dadurch gekennzeichnet, dass man für mehr als eine halbe Stunde intensiv mischt.

5. Verfahren gemäss Anspruch 4, dadurch gekennzeichnet, dass man für 1 bis 3 Stunden intensiv mischt.

6. Verfahren gemäss Anspruch 2, dadurch gekennzeichnet, dass man bei 10 bis 90°C intensiv mischt.

7. Verfahren gemäss Anspruch 6, dadurch gekennzeichnet, dass man bei 20 bis 70°C intensiv mischt.

8. Verfahren gemäss Anspruch 1, dadurch gekennzeichnet, dass der Anteil an Photoaktivator bei 0,0001 bis 0,1 %, bezogen auf die Menge an eingesetztem Füllstoff oder Pigment, liegt.

9. Verfahren gemäss Anspruch 8, dadurch gekennzeichnet, dass der Anteil an Photoaktivator bei 0,001 bis 0,01 %, bezogen auf die Menge an eingesetztem Füllstoff oder Pigment, liegt.

10. Verfahren gemäss Anspruch 1, dadurch gekennzeichnet, dass Phthalocyanin-Metallkomplexe des Aluminiums, Zinks, Magnesiums, Calciums, Eisens, Natriums oder Kaliums verwendet werden.

11. Verfahren gemäss Anspruch 10, dadurch gekennzeichnet, dass Phthalocyanin-Metallkomplexe des Mangans verwendet werden.

12. Verfahren gemäss Anspruch 10, dadurch gekennzeichnet, dass eine oder mehrere Verbindungen der Formel (1) verwendet werden, 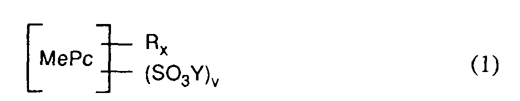 worin
MePC das Zink- oder Aluminiumphthalocyaninringsystem,
Y Wasserstoff, ein Alkalimetall oder Ammonium,
v eine beliebige Zahl von 1 bis 4,
R Fluor, Chlor, Brom oder Iod,
x eine beliebige Zahl von 0 bis 8
bedeutet.

13. Verfahren gemäss Anspruch 11, dadurch gekennzeichnet, dass eine oder mehrere Verbindungen der Formel (1) verwendet werden, 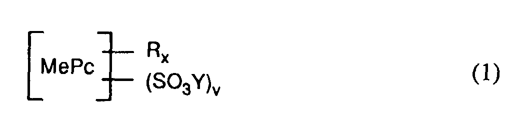 worin
MePC das Manganphthalocyaninringsystem,
Y Wasserstoff, ein Alkalimetall oder Ammonium,
v eine beliebige Zahl von 1 bis 4,
R Fluor, Chlor, Brom oder Iod,
x eine beliebige Zahl von 0 bis 8
bedeutet.

14. Verfahren gemäss Anspruch 12 oder 13, dadurch gekennzeichnet, dass eine oder mehrere Verbindungen der Formel (1) verwendet werden, worin
Y Wasserstoff, Kalium oder Natrium,
v eine Zahl von 2 bis 4,
R Chlor oder Brom,
x eine beliebige Zahl von 0 bis 2
bedeuten.

15. Verfahren gemäss Anspruch 14, dadurch gekennzeichnet, dass eine oder mehrere Verbindungen der Formel (1) verwendet werden, worin MePC das Zink- oder Aluminiumphthalocyaninringsystem und x eine beliebige Zahl von 0,8 bis 2 bedeuten.

16. Verfahren gemäss Anspruch 2, dadurch gekennzeichnet, das als Füllstoffe oder Pigmente Aluminiumsilikate, Magnesiumsilikate, Aluminium/Magnesium-Mischsilikate, Calciumcarbonate, Calciumsulfate, Titandioxide oder deren Mischungen verwendet werden.

17. Verfahren gemäss Anspruch 2, dadurch gekennzeichnet, das als Füllstoffe oder Pigmente Kaolin, Bentonit, Kreide, Kalkstein, Marmor, Calcit, Aragonit, Glimmer, Gips, Talkum oder deren Mischungen verwendet wird.

18. Verfahren gemäss Anspruch 2, dadurch gekennzeichnet, dass man als weitere Komponenten optische Aufheller verwendet

19. Verfahren gemäss Anspruch 18, dadurch gekennzeichnet, dass der optische Aufheller ein Diphenylbistyrylaufheller ist.

20. Verfahren gemäss Anspruch 19, dadurch gekennzeichnet, dass der Diphenylbistyrylaufheller eine Verbindung der Formel: 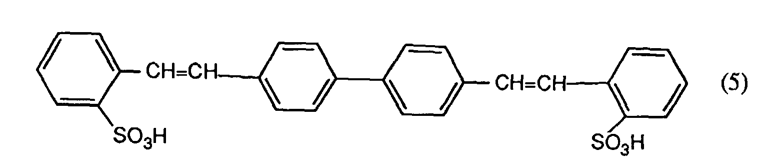 ist.

21. Die gemäss einem der Ansprüche 1 bis 20 hergestellten Füllstoffe, Pigmente sowie deren Mischungen.

22. Verwendung der Füllstoffe, Pigmente sowie deren Mischungen gemäss Anspruch 21 bei der Papier-, Lack-, Farben-, Keramik-, Gummi- und Kunststoffherstellung.

23. Verwendung der Füllstoffe, Pigmente sowie deren Mischungen gemäss Anspruch 21 bei der Papierherstellung.

24. Verfahren zur Herstellung von Papier, dadurch gekennzeichnet, dass die gemäss einem der Ansprüche 1 bis 20 hergestellten Füllstoffe, Pigmente sowie deren Mischungen, optischen Aufheller, Bindemittel, Fasermaterialen und/oder anderen Hilfsmitteln zu dem Papier gegeben werden.

25. Verfahren gemäss Anspruch 24, dadurch gekennzeichnet, dass der optische Aufheller ein Diphenylbistyrylaufheller ist.

## Claims

1. A process for enhancing the whiteness, brightness and chromaticity of a white, inorganic filler, pigment or a mixture thereof, which comprises adding a water-soluble phthalocyanine photoactivator or a mixture of water-soluble phthalocyanine photoactivators to the filler, pigment or mixture thereof.

2. A process according to claim 1, which comprises mixing the photoactivator or mixture of photoactivators, filler, pigment or a mixture thereof and further optional components with water to form an aqueous suspension.

3. A process according to claim 2, wherein the pH of the suspension is from 7.0 to 11.

4. A process according to claim 2, wherein the components are mixed thoroughly for longer than half an hour.

5. A process according to claim 4, wherein the components are mixed thoroughly for 1 to 3 hours.

6. A process according to claim 2, wherein the components are mixed thoroughly at from 10 to 90°C.

7. A process according to claim 6, wherein the components are mixed thoroughly at from 20 to 70°C.

8. A process according to claim 1, wherein the amount of photoactivator is from 0.0001 to 0.1%, based on the amount of filler or pigment employed.

9. A process according to claim 8, wherein the amount of photoactivator is from 0.001 to 0.01%, based on the amount of filler or pigment employed.

10. A process according to claim 1, which comprises using a phthalocyanine metal complex of aluminium, zinc, manganese, magnesium, calcium, iron, sodium or potassium.

11. A process according to claim 10, which comprises using a phthalocyanine metal complex of manganese.

12. A process according to claim 10, which comprises using one or more than one compound of formula (1) 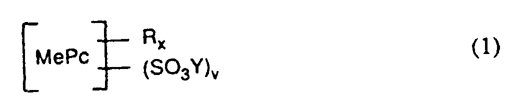 wherein
MePc is the zinc or aluminium phthalocyanine ring system,
Y is hydrogen, an alkali metal or ammonium,
v is any number from 1 to 4,
R is fluorine, chlorine, bromine or iodine, and
x is any number from 0 to 8.

13. A process according to claim 11, which comprises using one or more than one compound of formula (1) 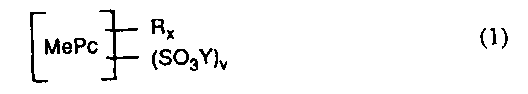 wherein
MePc is the manganese phthalocyanine ring system,
Y is hydrogen, an alkali metal or ammonium,
v is any number from 1 to 4,
R is fluorine, chlorine, bromine or iodine, and
x is any number from 0 to 8.

14. A process according to claim 12 or claim 13, which comprises using one or more than one compound of formula (1) wherein
Y is hydrogen, potassium or sodium,
v is a number from 2 to 4,
R is chlorine or bromine,
x is any number from 0 to 2.

15. A process according to claim 14, which comprises using one or more than one compound of formula (1) wherein MePc is the zinc or aluminium phthalocyanine ring system and x is any number from 0.8 to 2.

16. A process according to claim 2, wherein the fillers or pigments used are aluminium silicates, magnesium silicates, aluminium/magnesium mixed silicates, calcium carbonates, calcium sulfates, titanium dioxides or mixtures thereof.

17. A process according to claim 2, wherein the fillers or pigments used are kaolin, bentonite, chalk, limestone, marble, calcite, aragonite, mica, gypsum, talc or mixtures thereof.

18. A process according to claim 2, wherein a fluorescent whitening agent is used as further component.

19. A process according to claim 18, wherein the fluorescent whitening agent is a diphenylbistyryl whitener.

20. A process according to claim 19, wherein the diphenylbistyryl whitener is a compound of formula:

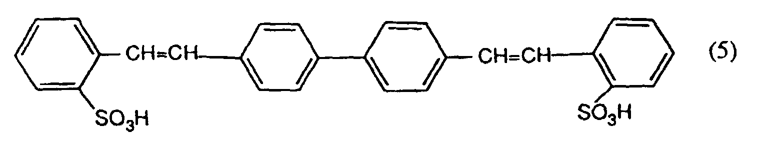

21. A filler, pigment or mixture thereof prepared according to any one of claims 1 to 20.

22. Use of a filler, pigment or mixture thereof according to claim 21 in the manufacture of paper, surface coatings, paints, ceramics, rubber and plastics.

23. Use of a filler, pigment or mixture thereof according to claim 21 in the manufacture of paper.

24. A process for the manufacture of paper, which comprises adding a filler, pigment or mixture thereof prepared according to any one of claims 1 to 20, a fluorescent whitening agent, a binder, fibre material and/or other auxiliaries to the paper.

25. A process according to claim 24, wherein the fluorescent whitening agent is a diphenylbistyryl whitener.

## Revendications

1. Procédé pour l'amélioration de la blancheur, de la clarté et du lieu spectral de charges ou pigments minéraux de couleur blanche ou de mélanges de ceux-ci, caractérisé en ce que l'on ajoute aux charges ou pigments ou à des mélanges de ceux-ci un photoactivateur hydrosoluble de type phtalocyanine ou un mélange de photoactivateurs hydrosolubles de type phtalocyanine.

2. Procédé conforme à la revendication 1, caractérisé en ce que le photoactivateur ou le mélange de photoactivateurs, les charges, pigments ou mélanges de ceux-ci ainsi qu'éventuellement d'autres composants sont mélangés avec de l'eau pour donner une suspension aqueuse.

3. Procédé conforme à la revendication 2, caractérisé en ce que le pH de la suspension est compris entre 7,0 et 11.

4. Procédé conforme à la revendication 2, caractérisé en ce que l'on mélange intensément pendant plus d'une demi-heure.

5. Procédé conforme à la revendication 4, caractérisé en ce que l'on mélange intensément pendant 1 à 3 heures.

6. Procédé conforme à la revendication 2, caractérisé en ce que l'on mélange intensément à une température comprise entre 10 et 90 °C.

7. Procédé conforme à la revendication 6, caractérisé en ce que l'on mélange intensément à une température comprise entre 20 et 70 °C.

8. Procédé conforme à la revendication 1, caractérisé en ce que la proportion de photoactivateur est comprise entre 0,0001 et 0,1 % rapporté à la quantité de charge ou pigment utilisée.

9. Procédé conforme à la revendication 1, caractérisé en ce que la proportion de photoactivateur est comprise entre 0,001 et 0,01 % rapporté à la quantité de charge ou pigment utilisée.

10. Procédé conforme à la revendication 8, caractérisé en ce que l'on utilise des complexes phtalocyanine-métal contenant de l'aluminium, du zinc, du magnésium, du calcium, du fer, du sodium ou du potassium.

11. Procédé conforme à la revendication 10, caractérisé en ce que l'on utilise le complexe métallique phtalocyanine-manganèse.

12. Procédé conforme à la revendication 10, caractérisé en ce que l'on utilise un ou plusieurs composés de formule (1) 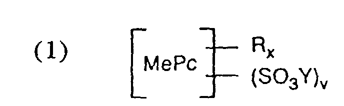 dans laquelle
MePC représente le système cyclique phtalocyanine-zinc ou phtalocyanine-aluminium,
Y représente un atome d'hydrogène, un métal alcalin ou un ion ammonium,
v est un nombre choisi entre 1 et 4,
R représente un atome de fluor, de chlore, de brome ou d'iode,
x est un nombre choisi entre 0 et 8.

13. Procédé conforme à la revendication II, caractérisé en ce que l'on utilise un ou plusieurs composés de formule (1) 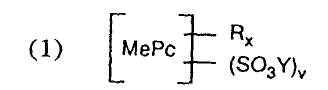 dans laquelle
MePC représente le système cyclique phtalocyanine-manganèse,
Y représente un atome d'hydrogène, un métal alcalin ou un ion ammonium,
v est un nombre choisi entre 1 et 4,
R représente un atome de fluor, de chlore, de brome ou d'iode,
x est un nombre choisi entre 0 et 8.

14. Procédé conforme à la revendication 12 ou 13, caractérisé en ce que l'on utilise un ou plusieurs composés de formule (1) dans laquelle
Y représente un atome d'hydrogène, un atome de potassium ou de sodium,
v est un nombre choisi entre 2 et 4,
R représente un atome de chlore ou de brome,
x est un nombre choisi entre 0 et 2.

15. Procédé conforme à la revendication 14, caractérisé en ce que l'on utilise un ou plusieurs composés de formule (1) dans laquelle MePC représente le système cyclique phtalocyanine-zinc ou phtalocyanine-aluminium et x est un nombre choisi entre 0,8 et 2.

16. Procédé conforme à la revendication 2, caractérisé en ce que l'on utilise comme charges ou pigments, des silicates d'aluminium, des silicates de magnésium, des silicates mixtes d'aluminium et de magnésium, des carbonates de calcium, des sulfates de calcium, des dioxydes de titane ou des mélanges de ceux-ci.

17. Procédé conforme à la revendication 2, caractérisé en ce que l'on utilise comme charges ou pigments, du kaolin, de la bentonite, de la craie, de la pierre à chaux, du marbre, de la calcite, de l'aragonite, du mica, du gypse, du talc ou des mélanges de ceux-ci.

18. Procédé conforme à la revendication 2, caractérisé en ce que l'on utilise des azurants optiques comme composants supplémentaires.

19. Procédé conforme à la revendication 18, caractérisé en ce que l'azurant optique est un azurant de type diphénylbistyryle.

20. Procédé conforme à la revendication 19, caractérisé en ce que l'azurant de type diphénylbistyryle est un composé de formule

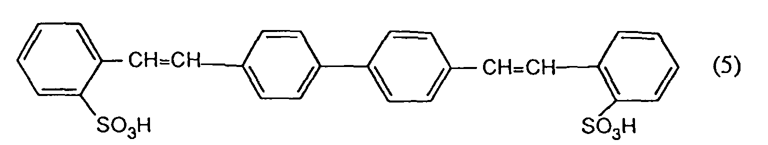

21. Charges, pigments ou mélanges de ceux-ci préparés conformément à une des revendications 1 à 20.

22. Utilisation des charges, pigments ou mélanges de ceux-ci conformes à la revendication 21 pour la préparation de papier, de vernis, de pentures, de céramiques, de caoutchoucs et de matières plastiques.

23. Utilisation des charges, pigments ou mélanges de ceux-ci conformes à la revendication 21 pour la fabrication du papier.

24. Procédé de préparation du papier, caractérisé en ce que l'on ajoute au papier les charges, pigments ou mélanges de ceux-ci préparés conformément à une des revendications 1 à 20, les azurants optiques, les liants, les matériaux fibreux et/ou d'autres adjuvants.

25. Procédé conforme à la revendication 24, caracérisé en ce que l'azurant optique est un azurant optique de type diphénylbistyryle.
